(19) Europäisches Patentamt
European Patent Office
Office européen des brevets

(11) **EP 3 354 383 A1**

(12) **DEMANDE DE BREVET EUROPEEN**

(43) Date de publication:
**01.08.2018 Bulletin 2018/31**

(51) Int Cl.:
**B23B 39/16** $^{(2006.01)}$     **B23B 39/24** $^{(2006.01)}$

(21) Numéro de dépôt: **18151957.0**

(22) Date de dépôt: **16.01.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD TN**

(30) Priorité: **25.01.2017  FR 1750605**

(71) Demandeur: **Le Creneau Industriel**
**74940 Annecy-le-Vieux (FR)**

(72) Inventeurs:
• **BAUD, Sébastien**
  **74110 LA COTE D'ARBOZ (FR)**
• **BOTTON, Bruno**
  **74150 HAUTEVILLE SUR FIER (FR)**

(74) Mandataire: **Croonenbroek, Thomas Jakob et al**
**Innovincia**
**11, avenue des Tilleuls**
**74200 Thonon-les-Bains (FR)**

(54) **DISPOSITIF DE PERCAGE ET PROCEDE DE PERCAGE UTILISANT UN TEL DISPOSITIF DE PERCAGE**

(57)     L'invention se rapporte à un dispositif de perçage (1) pour le perçage d'une plaque (12) présentant des portions coniques, comportant une platine porte-outils (2) munie d'une pluralité de broches de perçage (3) rotatives à forets (4) orientées selon des directions de perçage parallèles à une direction moyenne de perçage (M-M), lesdites broches de perçage (3) étant réparties d'une part en colonnes destinées à être disposées selon une direction axiale (Z) et d'autre part en rangées destinées à être disposées selon une direction transverse (R) perpendiculaire à la direction axiale (Z), le dispositif comportant au moins deux rangées de broches (3) et au moins deux colonnes de broches (3). L'entraxe (i2) entre deux broches (3) d'une rangée est différent de l'entraxe entre deux broches (3) d'une autre rangée.

Figure 7

EP 3 354 383 A1

## Description

La présente invention concerne un dispositif de perçage et procédé de perçage utilisant un tel dispositif de perçage, notamment de pièces de forme générale conique, tronconique ou plus généralement complexe, utilisés dans la construction de nacelles de réacteurs d'avions pour diminuer les nuisances sonores de ce derniers.

De nos jours, un avion de transport est généralement propulsé par un ensemble de turboréacteurs, chacun logé dans une nacelle de forme générale tubulaire, ou plus spécifiquement ayant des sections de forme conique ou tronconique.

Un tel turboréacteur comprend une soufflante généralement amont délivrant un flux d'air annulaire avec une partie annulaire centrale, primaire, qui alimente le moteur entraînant la soufflante et une partie annulaire extérieure, secondaire, qui est éjectée dans l'atmosphère tout en fournissant une fraction importante de la poussée.

Dans sa construction, pour fixer le rotor du moteur et guider le flux, le turboréacteur comprend une grille d'aubes fixes.

C'est sur cette grille que du bruit est généré par l'impact des fluctuations de vitesse et de pression sur les aubes qui ont pour origine un écoulement instationnaire.

Pour réduire le bruit de ces turboréacteurs, on utilise des dispositifs de réduction du bruit émis, par création de résonateurs de Helmholtz.

Dans la pratique, cela se traduit par le fait que les nacelles comportent des plaques acoustiques présentant par exemple une ou plusieurs couches de structures à âme alvéolaire, du type nid d'abeille Ces plaques acoustiques sont généralement réalisées en composite carbone, aluminium, titane, inconel. Les couches de structures à âme alvéolaire sont généralement revêtues sur leurs faces interne et externe de peaux en forme de plaques acoustiques présentant une multitude de trous de petit diamètre, répartis de façon à procurer un effet d'absorption acoustique des bruits générés par les réacteurs. Ces trous sont généralement réalisés par perçage, afin de garantir la précision, notamment en termes de positionnement, nécessaire à l'absorption acoustique efficace.

En effet, afin de créer des résonateurs Helmholtz avec un impact efficace sur l'absorption acoustique, la répartition des trous dans les plaques acoustiques est très importante et influe de façon significative sur le niveau de bruit généré par le turboréacteur.

Cependant, dans le cas de la fabrication d'une telle plaque, celle-ci ne peut être perforée qu'après avoir été mise en forme préalablement. Il en résulte que la plaque présente généralement une surface de forme conique, tronconique, concave, convexe ou complexe (avec des zones concaves et des zones convexes).

Or, pour parvenir à une absorption acoustique optimale, il est nécessaire que le positionnement précis des trous réalisés soit respecté dans des limites assez restreintes, même sur des formes complexes.

Pour ce faire, on connait du document EP 2 783 777 au nom de le Demanderesse un dispositif de perçage pour le perçage d'une plaque, comportant une platine porte-outils munie d'une pluralité de broches de perçage rotatives à forets orientées selon des directions de perçage parallèles à une direction moyenne de perçage. Les broches de perçage sont réparties à entraxe constant sur la platine porte-outils selon une première et une deuxième direction transverse pour former un arrangement en matrice de broches de perçage.

Selon une analyse plus fine du processus de perçage, on s'est aperçu de la présence de défauts de positionnement de trous inter-patch (entre deux patchs voisins) et intra-patch (à l'intérieur d'un même patch) dans les motifs de perçage si on utilise sur des portions de forme conique une platine porte-outils présentant une répartition matricielle des broches.

Or, avec les normes acoustiques dans le secteur de transport aérien qui deviennent de plus en plus drastiques en ce qui concerne les performances acoustiques des turboréacteurs, on s'est aperçu qu'une augmentation de la précision de positionnement des trous permettrait une réduction de bruit encore plus importante.

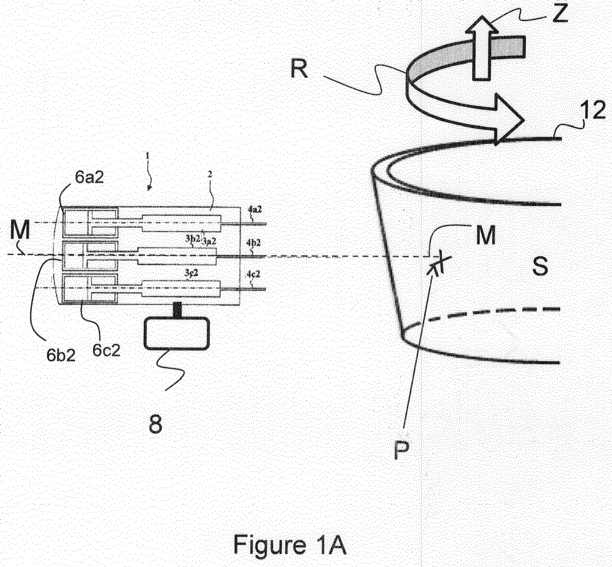

La figure 1A est une vue en perspective d'un dispositif de perçage 1 équipé d'une part d'une platine porte-outils 2 au regard d'une plaque 12 à percer et d'autre part de moyens de déplacement linéaire 8 de la platine porte-outils 2 selon la direction moyenne de perçage M-M. La platine porte-outils 2 est par exemple munie de neuf broches (seuls les broches 3a2, 3b2 et 3c2 sont visibles sur la figure 1A) disposés en matrice et portant des forets (seuls les forets 4a2, 4b2 et 4c2 sont visibles sur la figure 1A).

Sur cette figure, S désigne la surface de la plaque 12 qui doit être percée.

La plaque 12 se développe selon une forme de tronc de cône dont le rayon de la petite base se trouve en bas de la figure 1A et le rayon de la grande base se trouve en haut de la figure 1A.

Pour percer des trous, la platine porte-outils 2 est amenée en position de travail au regard de la surface S de la plaque 12, avec la direction moyenne de perçage M-M sensiblement perpendiculaire à la surface S en un point P de la plaque 12.

Pour plus de facilités, on se repère lors du perçage selon une direction axiale Z (du bas en haut sur la figure 1A), également appelé axe station qui désigne la direction destiné à être parallèle à l'axe de rotation du moteur du turboréacteur lorsque la plaque 12 est montée sur une nacelle avec le turboréacteur.

La direction transverse R (également appelé direction radiale) sur la surface S est perpendiculaire à la direction axiale. Comme une nacelle de réacteur est de forme générale cylindrique / tronconique, la direction transverse est donc perpendiculaire à l'axe du moteur du turboréacteur et perpendiculaire à la direction axiale Z.

Pour percer des trous dans la plaque 12, on peut donc se repérer selon l'axe Z d'une part et la position radiale transverse R d'autre part.

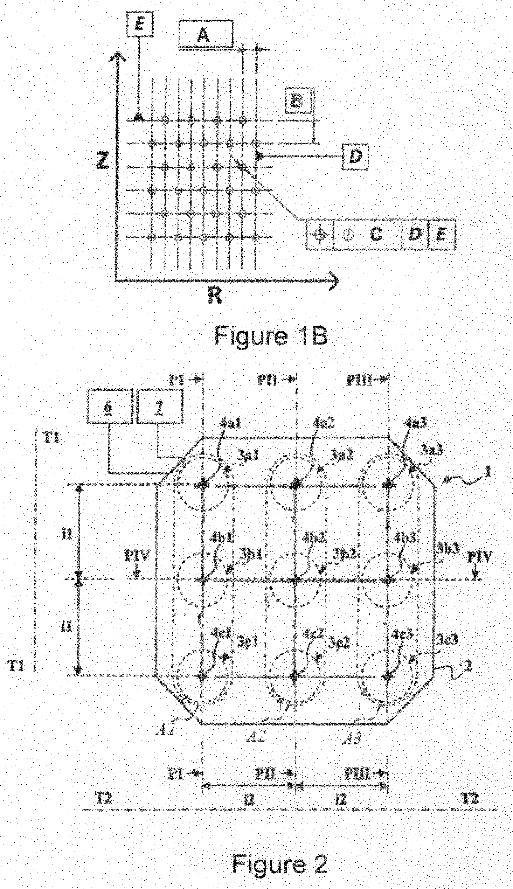

La figure 1B montre un exemple d'un motif élémentaire rectangulaire de perçage de trous dans une plaque acoustique 12.

Le motif de perçage peut aussi être carré ou en diamant.

La distance A désigne l'entraxe entre deux colonnes de trous et la distance B l'entraxe entre deux rangées et C étant le diamètre de la tolérance de localisation des trous d'un diamètre donné, les cotes E et D sont des références (plans) géométriques.

Comme on le voit sur la figure 1B, les trous de deux colonnes ou de deux rangées sont respectivement décalés les uns par rapport aux autres.

On suppose que pour percer les trous, on utilise un dispositif de perçage 1 équipé d'une platine porte-outils 2 munie d'une matrice de broches de perçage 3X3 comme montré sur la figure 2.

La platine porte-outils 2 présente trois arrangements linéaires de broches 3 de perçage A1, A2 et A3, déportés les uns par rapport aux autres à entraxe constant i2 sur la platine porte-outils 2 selon une seconde direction transversale T2-T2.

Les arrangements linéaires de broches de perçage A1, A2 et A3 sont respectivement contenus dans des plans parallèles PI, PII et PIII. Ces plans PI, PII et PIII sont parallèles à la direction axiale Z lors de la réalisation des opérations de perçage.

L'arrangement linéaire de broches de perçage A1 comporte trois broches de perçage 3a1, 3b1, et 3c1 réparties à entraxe constant i1 sur la platine porte-outils 2 selon la première direction transversale T1-T1, et portant respectivement des forets 4a1, 4b1, et 4c1.

L'arrangement linéaire de broches de perçage A2 comporte trois broches de perçage 3a2, 3b2, et 3c2, réparties à entraxe constant i1 sur la platine porte-outils 2 selon la première direction transversale T1-T1, et portant respectivement des forets 4a2, 4b2, et 4c2.

Enfin, l'arrangement linéaire de broches de perçage A3 comporte trois broches de perçage 3a3, 3b3, et 3c3, réparties à entraxe constant i1 sur la platine porte-outils 2 selon la première direction transversale T1-T1, et portant respectivement des forets 4a3, 4b3, et 4c3.

Les forets 4a1 à 4c3 sont orientés selon la direction moyenne de perçage M-M (voir figure 1A).

Selon une autre interprétation, le dispositif de perçage 1 comporte trois arrangements linéaires comprenant chacun trois broches de perçage 3a1-3a3, 3b1-3b3, et 3c1-3c3, déportés les uns par rapport aux autres à entraxe constant i2 sur la platine porte-outils 2 selon la seconde direction transversale T2-T2.

Selon cet exemple de réalisation le foret de perçage 4b2 se trouve dans le centre du motif et est confondu avec la direction moyenne de perçage M-M.

Le dispositif de perçage 1 peut comporter de plus des moyens pilotés de déplacement individuel (par exemple 6a2, 6b2 et 6c2 sur la figure 1A), pilotés par des moyens de commande 6 pour déplacer axialement par rapport à la platine porte-outils 2 chacune des broches rotatives de perçage 3a1 à 3c3 selon leurs directions de perçage respectives.

Le dispositif de perçage 1 comporte également des moyens de surveillance 7 de l'intensité du courant électrique consommé par chacune des broches de perçage 3a1 à 3c3.

Pour réaliser un motif de perçage, les entraxes i1 et i2 sont des multiples des entraxes A et B (voir figure 1B).

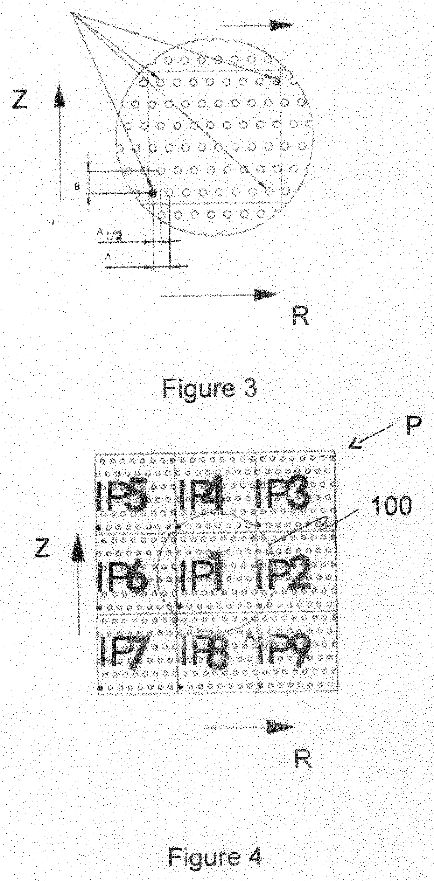

Le foret de perçage 4b2 qui est confondu avec la direction moyenne de perçage M-M est par exemple configuré pour percer des trous selon un motif de perçage comme représenté sur la figure 3, c'est-à-dire huit trous dans la direction transverse R et six trous dans la direction axiale Z. Selon un plan possible de perçage, on commence par exemple le motif en bas à gauche (vu sur la figure 3) pour finir en haut à droite (vu sur la figure 3) en perçant les divers trous matérialisé par des ronds.

Les autres broches 3 de la platine porte-outils 2 vont donc répéter, par transposition, le même motif comme cela est représenté sur la figure 4, le cercle 100 de la figure 4 correspondant au cercle représenté à la figure 3.

Ainsi, la broche 4b2 va percer les motifs dans le carré désigné par IP1, la broche 4b3 les motifs dans le carré désigné par IP2, la broche 4a3 les motifs dans le carré IP3, la broche 4a2 dans le carré IP4, la broche 4a1 dans le carré IP5, la broche 4b1 dans le carré IP6, la broche 4c1 dans le carré IP7, la broche 4c2 dans le carré IP8 et la broche 4c3 dans le carré IP9.

L'ensemble des carrés IP1 à IP9 forme un patch P et par répétition des patchs, c'est-à-dire en répétant des patchs dans des bandes selon la direction transverse R, des trous formant des résonateurs Helmholtz pour piéger le bruit vont pouvoir être pratiqués sur l'ensemble d'une plaque 12 à préparer.

Comme évoqué ci-dessus, pour une plaque de forme par exemple conique, on a constaté des défauts de régularité des trous percés entre les carrés adjacents de l'ensemble des carrés IP1 à IP9, ce que l'on appelle un défaut intra-patch ainsi qu'entre deux patchs adjacents (chaque patch étant formé par exemple de neuf carrés IP1 à IP9), ce que l'on appelle un défaut inter-patch.

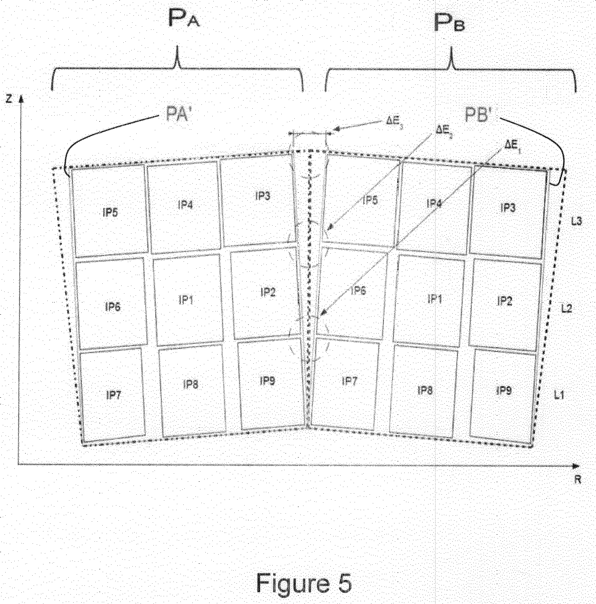

Sur la figure 5 sont représentés les carrés IP1 à IP9 de deux patchs adjacents.

Les contours des patches Pa et Pb délimitent les zones à percer idéalement, et les contours des patchs Pa' et Pb' délimitent les zones percées par une platine porte-outils 2 présentant une distribution strictement matricielle des broches 3.

Comme A est l'entraxe souhaité ou nominal entre les trous, la distance entre trous devrait être dans le cas idéal la même sur toute la plaque 12. Cela résulterait, comme montré sur la figure 4 pour une plaque plane que tous les carrés IP1 à IP9 se touchent pour former un seul carré ou rectangle. De même pour les patchs qui se toucheraient par leurs côtés.

Or du fait de la conicité / convexité de la plaque 12, en appliquant le motif de perçage pour la broche 4b2, les carrés IP2 à IP 9 sont finalement un peu décalés et la répartition des trous n'est pas aussi régulier comme sur la figure 4 pour une plaque plane.

On peut ainsi définir pour chaque ligne de carrés, la ligne $L_1$ comprenant les carrés IP7 à IP9, la ligne $L_2$ comprenant les carrés IP1, IP2 et IP6 et la ligne $L_3$ comprenant les carrés IP3 à IP5, un défaut inter-patch $\Delta Ei$ (i= 1, 2 ou 3 et correspondant à l'indice de la ligne de carrés).

Si la platine porte-outils 2 comportait plus de rangées que trois, le nombre de défauts inter-patch à prendre en compte correspondrait aux nombre de rangées des forets 4 ou de broches 3.

On constate également des défauts de positionnement de trous à l'intérieur des patchs $P_A$ et $P_B$ car comme on le voit, les carrés IP1 à IP9 ne sont pas jointifs avec leurs côtés.

Enfin on constate aussi des désalignements entre les carrées IP1 à IP9 dans la direction axiale.

Tous ces défauts de positionnement des trous percés contribuent à ce que la plaque ne puisse pas développer toutes ses facultés potentielles d'absorption acoustique.

L'invention vise à pallier au moins partiellement aux inconvénients ci-dessus, en proposant notamment un dispositif de perçage avec une platine porte-outils à broches multiples permettant de réduire les défauts présentés ci-dessus pour des plaques se développant au moins par portions de façon conique ou tronconique.

À cet effet, l'invention a pour objet un dispositif de perçage pour le perçage d'une plaque présentant des portions coniques, comportant une platine porte-outils munie d'une pluralité de broches de perçage rotatives à forets orientées selon des directions de perçage parallèles à une direction moyenne de perçage, lesdites broches de perçage étant réparties d'une part en colonnes destinées à être disposées selon une direction axiale et d'autre part en rangées destinées à être disposées selon une direction transverse perpendiculaire à la direction axiale, le dispositif comportant au moins deux rangées de broches et au moins deux colonnes de broches, caractérisé en ce que l'entraxe entre deux broches d'une rangée est différent de l'entraxe entre deux broches d'une autre rangée.

Selon un aspect la platine porte-outils présente une première et une dernière rangées de broches, la première rangée de broches étant destinée à être disposée du côté de la partie tronconique présentant le plus petit rayon de la plaque à percer et la dernière rangée de broches étant destinée à être disposée du côté de la partie tronconique présentant le plus grand rayon de la plaque à percer, l'entraxe entre deux broches augmentant d'une rangée à l'autre entre la première et la dernière rangées de broches.

Selon un autre aspect, selon lequel G est l'entraxe nominal entre deux broches d'une même rangée dans une configuration matricielle de la platine porte-outils et $\Delta E_i$ est un écart maximal inter-patch déterminé pour la rangée $L_i$ qui résulterait de perçages sur une portion conique par une configuration matricielle de la platine porte-outils, i étant un nombre entier i=1 à n, où n est le nombre de rangées de broches de la platine porte-outils, caractérisé en ce que la distance entre deux broches d'une même rangée i est donné par la relation :

$$D = G + F_i = G + \frac{k_1}{(m-1)} {}^* \Delta E_i$$

où m correspond au nombre de colonnes de broches de la platine porte-outils et $k_1$ une constante.

La constante est par exemple $k_1 = 0.71$.

Le nombre de rangées de broches peut être supérieure au nombre de colonnes de broches.

Selon un autre aspect, le nombre m de colonnes de broches est supérieur ou égal à trois et dans une même rangée de broches, les broches intermédiaires disposées entre les broches d'extrémité sont décalées selon la direction axiale par rapport aux broches d'extrémité.

Les broches d'une même rangée sont par exemple disposées selon un arc de cercle.

L'arc cercle est par exemple défini par les deux broches d'extrémité et un point sommet situé à équidistance des broches d'extrémité, le point sommet étant décalé par une valeur $\varepsilon_i$ des broches d'extrémité dans la direction axiale, la valeur $\varepsilon_i$ est donnée par la relation :

$$\varepsilon_i = k_2 {}^* \left( \Delta E_i - \Delta E_{i-1} \right),$$

où $k_2$ une constante et $\Delta E_0 = 0$, la constante $k_2$ étant par exemple $k_2 = 0.17$.

L'invention concerne également un procédé de perçage d'une plaque présentant une portion conique à l'aide d'un dispositif de perçage tel que défini ci-dessus, dans lequel

- on fournit la forme de la portion conique à percer à des moyens de calculs,
- on divise la portion conique à percer en bandes selon la direction transverse, puis pour au moins une bande :
- on positionne la platine de porte-outils pour percer des trous par zones contiguës le long de la direction transverse en orientant la platine porte-outils de manière que la rangée de broches ayant l'entraxe entre broches le plus faible soit disposée du côté de la plaque à percer ayant le rayon le plus faible.

Selon un autre aspect, lors du perçage de trous selon un motif dans une zone, on dirige la platine porte outils entre deux opérations de perçage de trous selon des pas réguliers dans la direction axiale et/ou la direction transverse correspondant à l'entraxe entre trous selon la direction axiale et/ou la direction transverse.

Selon encore un autre aspect lors du perçage de trous selon un motif dans une zone, on dirige la platine porte-outils entre deux opérations de perçage de trous selon des pas réguliers dont l'espacement dans la direction axiale est compris dans les tolérances d'entraxe nominal entre trous et différent de l'entraxe nominal entre trous dans la direction axiale de manière à adapter l'extension dans la direction axiale de la zone à percer pour corriger des défauts géométriques entre bandes à percer.

D'autres avantages et caractéristiques apparaîtront à la lecture de la description des figures suivantes, données à titre d'exemple non limitatif.

- La figure 1A est une vue en perspective d'un dispositif de perçage au regard d'une plaque à percer,
- la figure 1B montre un exemple d'un motif élémentaire rectangulaire de perçage de trous dans une plaque acoustique,
- la figure 2 selon une vue de face un exemple d'un dispositif de perçage selon l'état de la technique comportant une répartition matricielle de broches de perçage,
- la figure 3 montre de façon schématique un motif de perçage de trous réalisé par une seule broche,
- la figure 4 montre un exemple d'un motif de perçage de trous réalisés par une platine porte-outils comportant 3X3 broches selon une disposition matricielle sur une plaque acoustique plane,
- la figure 5 montre un exemple d'un motif de perçage de trous réalisés par une platine porte-outils comportant 3X3 broches selon une disposition matricielle sur une plaque acoustique conique,
- la figure 6 montre un schéma permettant de déterminer des défauts inter-patch,
- la figure 7 montre un exemple selon une vue schématique de face une platine porte-outils selon un premier mode de réalisation,
- la figure 8 montre une vue schématique en coupe de la figure 7 selon un plan de coupe central PII,
- la figure 9 montre un exemple selon une vue schématique de face une platine porte-outils selon un deuxième mode de réalisation,
- la figure 10 montre un schéma simplifié pour positionner les broches centrales de façon décalée par rapport à la direction transverse,
- la figure 11 montre un exemple de portion de plaque à percer selon une première version conventionnelle avec une extension constante selon la direction axiale des patchs,

- la figure 12 montre un exemple de portion de plaque à percer selon une seconde version permettant d'adapter l'extension selon la direction axiale des patchs,
- Les figures 13A et 13B montrent selon des vues schématiques des exemples simplifiés de motifs de perçage selon la direction axiale à savoir une première version conventionnelle et seconde version permettant d'adapter l'extension axiale des patchs,
- les figures 14 et 15 sont des vues en perspective de deux porteurs automatisés numériques sur lesquels peut être porté le dispositif de perçage selon l'invention.

Sur toutes les figures les mêmes références s'appliquent aux mêmes éléments.

Pour certains aspects spécifiques de réalisation, on peut se référer au brevet publié EP 2 783 777 au nom de la Demanderesse.

Sur certaines figures, un repère est indiqué afin de mieux comprendre l'orientation des éléments des uns par rapport aux autres.

Dans le présent exposé, la direction axiale Z (du bas en haut sur les figures), également appelé axe station qui désigne la direction destiné à être parallèle à l'axe de rotation du moteur du turboréacteur lorsque la plaque à percer est monté sur une nacelle avec le turboréacteur.

La direction transverse R (également appelé direction radiale) est perpendiculaire à la direction axiale Z. Comme une nacelle de réacteur est de forme générale cylindrique / tronconique, la direction transverse est donc perpendiculaire à l'axe du moteur du turboréacteur et perpendiculaire à la direction axiale Z.

Les réalisations décrites sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Par ailleurs, on est amené dans le présent exposé à indexer des éléments. Par exemple un élément peut porter un numéro de référence suivi de deux indices. Il s'agit donc d'éléments identiques disposés par exemple à des endroits différents. Ainsi, une broche peut être référencée par le chiffre 3 et la broche 3a1 signifie une broche 3 de la rangée a et de la colonne 1.

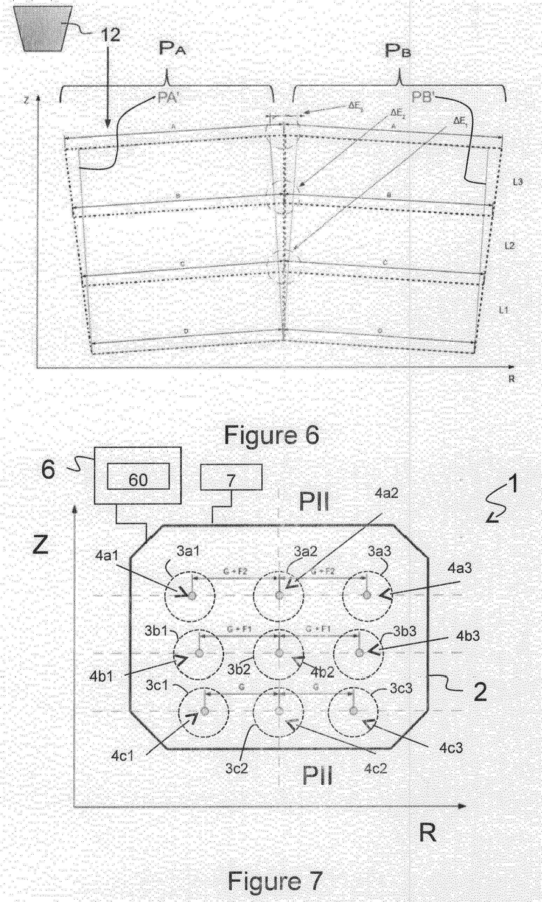

On se réfère à la figure 6 et suppose bien entendu que les plans de la plaque 12 à percer sont fournis sous forme numérique pour permettre de concevoir la platine porte-outils 2 en CAO (conception assisté par ordinateur) du dispositif de perçage 1.

On suppose dans le cadre du présent exposé que la plaque 12 comme montré sur la figure 1A présente une forme tronconique dont le petit rayon se trouve en bas (vue sur la page de figures) et le grand rayon se trouve en haut (un petit schéma de la plaque 12 figure en haut de la figure 6).

Pour une plaque 12 plus complexe, il est envisagé de concevoir différentes platines porte-outils 2 pour différentes zones de la plaque 12 pour pouvoir répondre dans chaque zone aux exigences de précision de perçage tout en ayant dans la mesure du possible le plus grand nombre de broches 3 afin de percer en une seule fois le plus de trous possible.

La figure 6 montre un schéma permettant de déterminer des défauts inter-patch qui résulterait de l'utilisation d'une platine porte-outils 2 munie de broches 3 de façon matricielle comme expliqué en rapport aux figures 1A à 5. Les contours des patches Pa et Pb délimitent les zones à percer idéalement, et les contours des patchs Pa' et Pb' délimitent les zones percées par une platine porte-outils 2 présentant une distribution strictement matricielle des broches 3.

Sur la figure 6, le contour d'un patch PA a été matérialisé par un carré tracé avec un trait et des points simples en alternance et le contour d'un patch PB a été matérialisé par un carré tracé avec un trait et des points doubles en alternance.

On peut ainsi déterminer pour chaque ligne $L_1$ à $L_3$ un défaut inter-patch $\Delta Ei$ (i= 1, 2 ou 3 et correspondant à l'indice de la ligne de carrés), A étant l'entraxe nominal entre trous.

Pour diminuer les défauts inter-patch, ainsi que les défauts intra-patch, l'idée de l'invention consiste à étaler pour chaque ligne $L_i$ le défaut selon la direction transverse R tout en restant dans les tolérances d'entraxes entre trous données par le constructeur de la nacelle devant être équipée d'une plaque 12 percée.

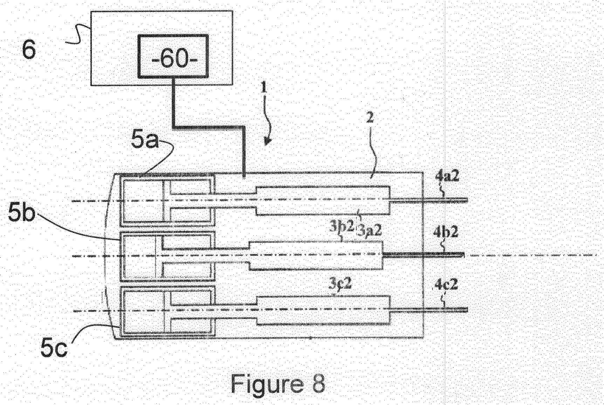

Ainsi, la figure 7 montre un exemple selon une vue schématique de face d'une platine porte-outils 2 selon un premier mode de réalisation et la figure 8 montre une vue schématique en coupe de la figure 7 selon un plan de coupe central PII.

Cet exemple est très similaire de la platine porte-outils des figures 1A et 2 et diffère de celui-ci par le positionnement précis des broches 3a1 à 3c3 qui n'est plus matricielle. En effet, l'entraxe entre deux broches 3 d'une rangée a, b ou c dans la direction transverse est différent de l'entraxe entre deux broches 3 d'une autre rangée par exemple b, c ou a dans la direction transverse R.

Pour faire ressortir ces différences, la figure 7 est simplifiée par rapport à la figure 2 et montre un peu moins de détail pour se focaliser sur ces différences de positionnement des broches 3 d'une rangée par rapport à une autre rangée.

Ainsi, le dispositif de perçage 1 pour le perçage d'une plaque 12 présentant des portions coniques, comporte une platine porte-outils 2 munie d'une pluralité de broches de perçage rotatives 3a1 à 3c3 à forets 4a1 à 4a3 orientées selon des directions de perçage parallèles à une direction moyenne de perçage M-M.

Les broches de perçage 3 étant réparties d'une part en colonnes indexés dans le présent exemple de réalisation de 1 à 3 et destinées à être disposées selon une direction axiale Z et d'autre part en rangées indexés a, b et c destinées à être disposées selon une direction transverse R, perpendiculaire à la direction axiale.

Le nombre de rangées est au moins de deux, mais peut atteindre par exemple cinq ou sept rangées de broches 3.

Le nombre de colonnes est au moins de deux, mais peut atteindre par exemple trois ou cinq rangées de broches 3.

La platine porte-outils 2 présente une première et une dernière rangées de broches 3. La première rangée de broches 3 est destinée à être disposée du côté de la partie tronconique présentant le plus petit rayon de la plaque 12 à percer et la dernière rangée de broches 3 est destinée à être disposée du côté de la partie tronconique présentant le plus grand diamètre de la plaque 12 à percer. L'entraxe entre deux broches augmente d'une rangée à la suivante adjacente entre la première et la dernière rangées de broches 3. Selon le mode de réalisation de la figure 7, la première rangée de broches 3 correspond à la rangée portant les broches 3c1 à 3c3 et la dernière rangée de broches 3 correspond à la rangée portant les broches 3a1 à 3a3.

Si G est l'entraxe nominal entre deux broches 3 d'une même rangée dans une configuration matricielle de la platine porte-outils 2 (qui serait adaptée pour une plaque plane et dans laquelle G est un multiple de l'entraxe entre l'entraxe entre trous) et $\Delta E_i$ est un écart maximal inter-patch déterminé pour la rangée i et résultant de perçages sur une portion conique par une configuration matricielle, i étant un nombre entier i=1 à n, où n est le nombre de rangées de broches de la platine porte-outils, l'entraxe entre deux broches 3 pour une platine porte outils 2 selon l'invention comme montrée sur la figure 7 est donné par la relation :

$$D = G + F_i = G + \frac{k_1}{(m-1)} * \Delta E_i$$

où m correspond au nombre de colonnes de broches 3 de la platine porte-outils 2 et
$k_1$ une constante strictement positive, notamment $k_1 = 0.71$.

Dans la conception de la platine porte-outils 2, on veille à ce que le terme $\left| \frac{k_1}{(m-1)} * \Delta E_i \right| \leq \frac{IT}{2}$ avec IT l'intervalle de tolérance donné par le client.

La figure 8 est une vue en coupe transversale du dispositif de perçage selon le plan PII-PII.

Le dispositif de perçage 1 comporte en outre des moyens pilotés de déplacement individuel 5a à 5c, pilotés par des moyens de commande 6 pour déplacer axialement par rapport à la platine porte-outils 2 chacune des broches rotatives de perçage 3a1 à 3c3 selon leurs directions de perçage respectives parallèle à M-M.

Pour piloter de façon automatique les moyens pilotés de déplacement individuels 5a à 5c, les moyens de commande 6 comprennent des moyens de calculs 60 qui sont reliés à des moyens d'acquisition de forme aptes à mémoriser une image numérique de la forme de la surface S de la plaque 12 à percer, et à des moyens d'acquisition de position aptes à mémoriser la position de la plaque 12 à percer dans un référentiel R prédéterminé.

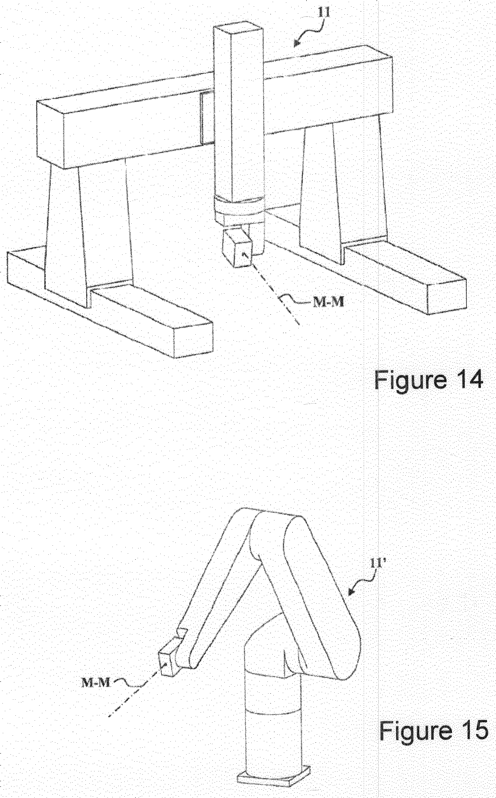

Pour assurer le déplacement de la platine porte-outils 2 par rapport à la plaque à percer lors du cycle de perçage, la platine porte-outils 2 est montée sur un porteur cartésien 11 à cinq ou six axes (figure 14) ou, en alternative, sur un porteur polaire 11' à cinq ou six axes (figures 15). Les porteurs cartésien 11 et polaire 11' sont tous les deux des machines programmables à commande numérique.

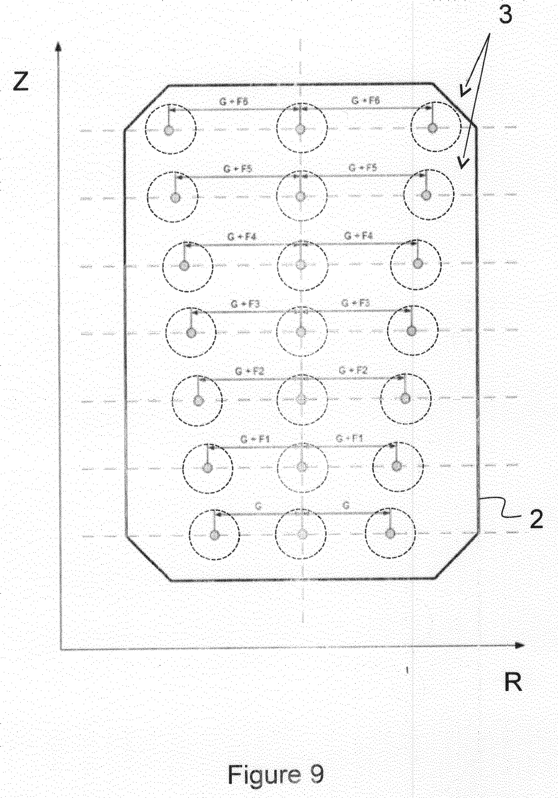

Le figure 9 montre un deuxième mode de réalisation selon lequel le nombre de rangées de broches 3 est supérieure au nombre de colonnes de broches 3. Le dessin est encore simplifié et les broches 3 sont, comme sur les autres figures, représentés par un cercle en traits. En effet, la platine porte-outils 2 présente ici trois colonnes et sept rangées de broches 3.

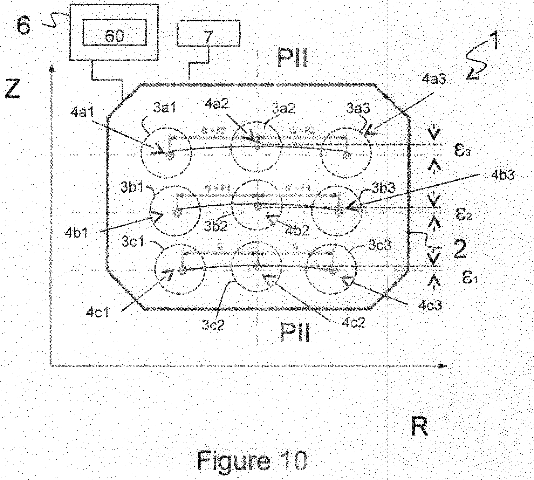

La figure 10 montre encore un autre mode de réalisation qui diffère de celui de la figure 7 par le fait que les broches 3a2, 3b2 et 3c2 dites broches intermédiaires ne sont plus alignées avec les broches 3 des colonnes adjacentes, c'est-à-dire des broches d'extrémité 3a1, 3b1 et 3c1 d'une part et 3a3, 3b3 et 3c3 d'autre part, mais décalées selon la direction axiale Z.

Plus précisément pour une platine porte-outils 2 ayant un nombre m de colonnes de broches 3 supérieur ou égal à trois et dans une même rangée de broches formée de broches d'extrémité et de broches intermédiaires disposées entre les broches d'extrémité, les broches intermédiaires sont décalées selon la direction axiale Z par rapport aux broches d'extrémité.

Les broches 3 d'une même rangée sont disposées selon un arc de cercle qui peut être défini d'une part par les deux broches d'extrémité, ici par exemple 3c1 et 3c3, 3b1 et 3b3 ou encore 3a1 et 3a3 et d'autre part par le point sommet de l'arc de cercle qui est situé à équidistance des broches d'extrémité et décalé par une valeur $\varepsilon_i$ des broches d'extrémité dans le sens axial.

Dans le présent exemple de réalisation, le point sommet de l'arc de cercle est confondu avec l'axe des broches intermédiaires, ici 3a2, 3b2 et 3c2 respectivement, et aussi avec la position des forets 4a2, 4b2 et 4c2.

La valeur de décalage $\varepsilon_i$ est donnée par la relation :

$$\varepsilon_i = k_{2*} \left( \Delta E_i - \Delta E_{i-1} \right) \, ,$$

où $k_2$ une constante, notamment $k_2 = 0.17$ et $\Delta E_0 = 0$.

Dans le cas où la platine porte-outils 2 comporte par exemple quatre broches 3, aucune broche 3 d'une même rangée se trouve au sommet, mais il y deux broches 3 intermédiaires qui sont positionnées sur l'arc de cercle ainsi défini et se trouvent décalés du même écart de la ligne reliant les deux broches 3 d'extrémité.

Pour réaliser des trous dans une plaque 12 présentant une portion conique à l'aide d'un dispositif de perçage 1 tel que défini ci-dessus, on procède de la façon suivante.

Lors d'une première étape, on fournit la forme de la portion conique à percer à des moyens de calculs 60.

Pour établir un plan de perçage, on divise la portion conique à percer en bandes selon la direction axiale Z.

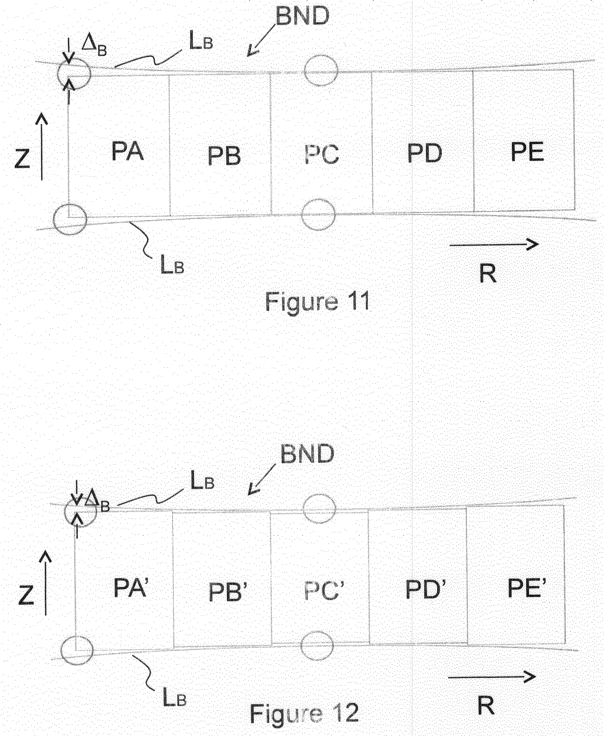

La figure 11 montre un exemple d'une telle bande BND qui présente une forme amincie au centre et plus élargie aux extrémités. Cette problématique se pose en particulier pour des plaques présentant des variations par rapport à une symétrie de révolution stricte. En effet les nacelles et ainsi les plaques acoustiques 12 sont proches d'une symétrie révolution, mais pas exactement. Plus généralement, les pièces de nacelle d'avion sont de révolution à section constante ou de révolution à section non constante. De plus, à l'intérieur de ces pièces, on peut rencontrer des zones spécifiques qui sont de forme aléatoire (notamment les bords des pièces) et qui ne sont pas de révolution mais qui appartiennent à une pièce globale possédant un axe de révolution.

Sur cette figure 11 sont également représentés divers patchs PA, PB, PC, PD et PE disposés de façon contiguë.

Puis, on positionne la platine de porte-outils 2 pour percer par patchs successifs des trous dans la bande BND selon des motifs par zones contiguës le long de la direction transverse R.

Sur la figure 11, on réalise les trous en orientant la platine porte-outils 2 de manière que

    ∘ le plan central PII des colonnes de broches 3 soit parallèle à la direction axiale Z de la plaque 12 à percer,

    ∘ la rangée de broches $L_1$ présentant l'entraxe entre broches 3 le plus faible soit disposée du côté du rayon de la partie tronconique la plus faible.

Après avoir terminé une bande, on déplace la platine de porte-outils 12 selon la direction axiale Z pour la mettre en position pour la bande suivante et pour recommencer les opérations de perçage.

Puis on arrête le procédé lorsque les zones à traiter sont munies de trous.

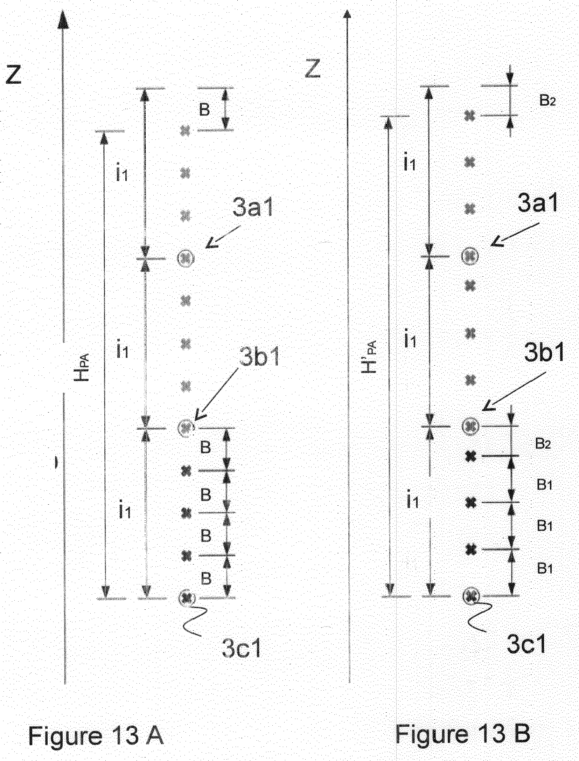

La figure 11 ainsi que la figure 13A montrent un exemple de portion de plaque à percer selon une première version conventionnelle avec une extension axiale des patchs constante.

Comme on peut le voir sur la figure 13A, l'exemple concerne une platine porte-outils 2 avec n rangées de broches 3, ici n=3.

Pour des raisons de simplification, on peut considérer que la platine porte-outil 2 est identique à celle de la figure 7 par exemple, mais seule les broches 3a1, 3b1 et 3c1 sont représentées.

B est l'entraxe nominal entre deux trous matérialisé par une croix et i1 est l'entraxe nominal entre les broches 3 qui est un multiple de B (i1 =j*B, avec j nombre naturel > 1, typiquement j est compris entre 4 et 10), dans le présent cas i1 =4* B. De manière conventionnelle, on peut choisir le pas de déplacement de la platine porte-outils 2 dans le sens axial Z égal à l'entraxe nominal B entre deux trous. Dans ce cas, l'extension axial des patchs PA à PE est constante et égale à au nombre de broches 3 dans une colonne diminué d'un pas, c'est-à-dire dans le présent cas avec m broches 3 par rangée :

$$H_{PA} = m*i1 - B = (m*j-1) * B.$$

Comme on peut le constater sur la figure 11 dans la bande, le patch central PC est bien placé tandis que les PA et PE montrent un écart $\Delta_B$ non négligeable avec la limite de bande Lb, ce qui conduit à des défauts « inter-bande » qui peuvent apparaître sur des plaques 12 qui suivent une symétrie de quasi révolution. Pour remédier à ces défauts inter-bande, la déposante a eu l'idée que l'extension dans la direction axiale des patchs peut être modifiée dans certaines limites comme montré les figures 12 et 14B.

La figure 14B est similaire à celle de la figure 14A et diffère seulement des pas de perçage dans la direction axiale.

Ainsi, lors de la réalisation de trous pour un patch donné, on peut choisir un pas régulier de déplacement différent de l'entraxe entre trous, c'est-à-dire un pas $B_1 \neq B$ (voir figure 13B).

Dans ce cas :

$$H'_{PA} = m*i1 - B_2 \text{ avec } B_2 = i1 - j* B_1$$

La seule condition supplémentaire pour B2 est que B2 doit être dans la limite des tolérances d'entraxes entre trous.

Sur la figure 13B par exemple, en choisissant $B_1$ > B, l'entraxe entre le dernier trou réalisé par la première broche 3c1 et le premier trou réalisé par la broche 3b1 est égal à $B_2$ < B. Mais on remarque que l'extension axiale du patch de la figure 13B est plus grande que celle de la figure 13A.

Ainsi on comprend que l'on peut ajuster l'extension axiale des patchs et réduire, voire supprimer les défauts inter-bandes.

Le concept derrière cette adaptation de l'extension axiale est semblable à celle pour la conception de la platine porte-outils 2 pour diminuer voire supprimer les défauts liées à la forme conique de la plaque 12, c'est-à-dire à étaler ou répartir pour chaque colonne le défaut selon la direction axiale tout en restant dans les tolérances d'entraxes données par le constructeur de la plaque 12 à percer.

Selon un mode de réalisation, le procédé permettant d'adapter l'extension axiale des patchs peut être mis en oeuvre de façon indépendante également pour une platine porte-outils 2 à répartition de broches 3 de façon matricielle. Une protection par brevet pourrait être recherchée de façon indépendante pour ce procédé.

La figure 12 est semblable à la figure 11 sauf que l'extension axiale selon Z des divers patchs PA', PB', PC', PD' et PE' disposés de façon contiguë n'est plus constante et est adapté aux limites $L_B$ de bande pour diminuer $\Delta_B$ le plus possible tout en restant dans les limites $L_B$.

Comme on le voit sur la figure 12, on peut mieux respecter les limites inter-bandes $L_B$ pour l'ensemble des patchs PA' à PE'.

On comprend que par les caractéristiques de l'invention, on peut mieux respecter le cahier de charges pour des plaques 12 ayant des portions notamment coniques. Ceci permet ensuite à contribuer à une meilleure efficacité de la plaque acoustique entourant le turboréacteur et de diminuer davantage le bruit émis par celui-ci.

On gagne aussi en efficacité car on peut augmenter le nombre de broches 3 pour une platine porte-outils 2 et réduire le temps nécessaire au perçage.

**Revendications**

1.  Dispositif de perçage (1) pour le perçage d'une plaque (12) présentant des portions coniques, comportant une platine porte-outils (2) munie d'une pluralité de broches de perçage (3) rotatives à forets (4) orientées selon des directions de perçage parallèles à une direction moyenne de perçage (M-M), lesdites broches de perçage (3) étant réparties d'une part en colonnes destinées à être disposées selon une direction axiale (Z) et d'autre part en rangées destinées à être disposées selon une direction transverse (R) perpendiculaire à la direction axiale (Z), le dispositif comportant au moins deux rangées de broches (3) et au moins deux colonnes de broches (3), **caractérisé en ce que** l'entraxe ($i_2$) entre deux broches (3) d'une rangée est différent de l'entraxe entre deux broches (3) d'une autre rangée.

2.  Dispositif selon la revendication 1, **caractérisé en ce que** la platine porte-outils (2) présente une première et une dernière rangées de broches (3), la première rangée de broches (3) étant destinée à être disposée du côté de la partie tronconique présentant le plus petit rayon de la plaque (12) à percer et la dernière rangée de broches (3) étant destinée à être disposée du côté de la partie tronconique présentant le plus grand rayon de la plaque (12) à percer, l'entraxe entre deux broches (3) augmentant d'une rangée à l'autre entre la première et la dernière rangées de broches (3).

3. Dispositif selon l'une quelconque des revendications 1 à 2, dans laquelle G est l'entraxe nominal entre deux broches (3) d'une même rangée dans une configuration matricielle de la platine porte-outils (2) et $\Delta E_i$ est un écart maximal inter-patch déterminé pour la rangée $L_i$ qui résulterait de perçages sur une portion conique par une configuration matricielle de la platine porte-outils (2), i étant un nombre entier i=1 à n, où n est le nombre de rangées de broches de la platine porte-outils, **caractérisé en ce que** la distance entre deux broches d'une même rangée i est donné par la relation :

$$D = G + F_i = G + \frac{k_1}{(m-1)} * \Delta E_i$$

où m correspond au nombre de colonnes de broches de la platine porte-outils et $k_1$ une constante.

4. Dispositif selon la revendication 3, **caractérisé en ce que** la constante $k_1$ = 0.71.

5. Dispositif selon l'une quelconque des revendications 1 à 4, **caractérisé en ce que** le nombre de rangées de broches (3) est supérieure au nombre de colonnes de broches (3).

6. Dispositif selon l'une quelconque des revendications 1 à 5, **caractérisé en ce que** le nombre m de colonnes de broches (3) est supérieur ou égal à trois et **en ce que** dans une même rangée de broches (3), les broches intermédiaires (3a2, 3b2, 3c2) disposées entre les broches d'extrémité (3a1, 3b1, ; 3a3, 3b3, 3c3) sont décalées selon la direction axiale (Z) par rapport aux broches d'extrémité (3a1, 3b1, ; 3a3, 3b3, 3c3).

7. Dispositif selon la revendication 6, **caractérisé en ce que** les broches (3) d'une même rangée sont disposées selon un arc de cercle.

8. Dispositif selon la revendication 7, **caractérisé en ce que** l'arc cercle est défini par les deux broches d'extrémité (3a1, 3b1, ; 3a3, 3b3, 3c3) et un point sommet situé à équidistance des broches d'extrémité (3a1, 3b1, ; 3a3, 3b3, 3c3), le point sommet étant décalé par une valeur $\varepsilon_i$ des broches d'extrémité (3a1, 3b1, 3c1 ; 3a3, 3b3, 3c3) dans la direction axiale (Z), la valeur $\varepsilon_i$ est donnée par la relation :

$$\varepsilon_i = k_2 * \left( \Delta E_i - \Delta E_{i-1} \right) \text{,}$$

où $k_2$ une constante et $\Delta E_0 = 0$.

9. Dispositif selon la revendication 8, **caractérisé en ce que** la constante $k_2$ = 0.17.

10. Procédé de perçage d'une plaque (12) présentant une portion conique à l'aide d'un dispositif de perçage (1) selon l'une quelconque des revendications 1 à 9, dans lequel

   - on fournit la forme de la portion conique à percer à des moyens de calculs (60),
   - on divise la portion conique à percer en bandes (B) selon la direction transverse, puis pour au moins une bande :
   - on positionne la platine de porte-outils (2) pour percer des trous par zones contiguës le long de la direction transverse en orientant la platine porte-outils (2) de manière que

   ◦
   ◦ la rangée de broches (3) ayant l'entraxe entre broches le plus faible soit disposée du côté de la plaque (12) à percer ayant le rayon le plus faible.

11. Procédé selon la revendication 10, **caractérisé en ce que** lors du perçage de trous selon un motif dans une zone, on dirige la platine porte outils (2) entre deux opérations de perçage de trous selon des pas réguliers dans la direction axiale et/ou la direction transverse correspondant à l'entraxe entre trous selon la direction axiale et/ou la direction transverse.

12. Procédé selon la revendication 10, **caractérisé en ce que** lors du perçage de trous selon un motif dans une zone, on dirige la platine porte-outils (2) entre deux opérations de perçage de trous selon des pas réguliers dont l'espacement dans la direction axiale est compris dans les tolérances d'entraxe nominal entre trous et différent de l'entraxe nominal entre trous dans la direction axiale de manière à adapter l'extension dans la direction axiale de la zone à percer pour corriger des défauts géométriques entre bandes à percer.

Figure 1A

Figure 1B

Figure 2

Figure 3

Figure 4

Figure 5

Figure 6

Figure 7

Figure 8

Figure 9

Figure 10

Figure 11

Figure 12

Figure 13 A

Figure 13 B

11

M-M

Figure 14

11'

M-M

Figure 15

Europäisches
Patentamt

European
Patent Office

Office européen
des brevets

**RAPPORT DE RECHERCHE EUROPEENNE**

Numéro de la demande

EP 18 15 1957

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | GB 1 373 526 A (KLOECKNER HUMBOLDT DEUTZ AG) 13 novembre 1974 (1974-11-13) | 1-5 | INV. B23B39/16 B23B39/24 |
| A | * page 2, lignes 5-117; figures 1-6 * | 10-12 | |
| X | DE 44 09 912 A1 (STEGHERR GMBH & CO KG [DE]) 28 septembre 1995 (1995-09-28) | 1,6-9 | |
| A | * colonne 3, lignes 13-64; revendications 1-5; figures 1-6 * | 10-12 | |

DOMAINES TECHNIQUES
RECHERCHES (IPC)

B23B
B27C

Le présent rapport a été établi pour toutes les revendications

| Lieu de la recherche | Date d'achèvement de la recherche | Examinateur |
|---|---|---|
| La Haye | 17 mai 2018 | Lorence, Xavier |

CATEGORIE DES DOCUMENTS CITES

X : particulièrement pertinent à lui seul
Y : particulièrement pertinent en combinaison avec un
  autre document de la même catégorie
A : arrière-plan technologique
O : divulgation non-écrite
P : document intercalaire

T : théorie ou principe à la base de l'invention
E : document de brevet antérieur, mais publié à la
  date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 18 15 1957

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-05-2018

| Document brevet cité<br>au rapport de recherche | | Date de<br>publication | Membre(s) de la<br>famille de brevet(s) | | Date de<br>publication |
|---|---|---|---|---|---|
| GB 1373526 | A | 13-11-1974 | DE<br>GB | 2058749 A1<br>1373526 A | 31-05-1972<br>13-11-1974 |
| DE 4409912 | A1 | 28-09-1995 | AUCUN | | |

EPO FORM P0460

Pour tout renseignement concernant cette annexe : voir Journal Officiel de l'Office européen des brevets, No.12/82

**EP 3 354 383 A1**

## RÉFÉRENCES CITÉES DANS LA DESCRIPTION

**Documents brevets cités dans la description**

- EP 2783777 A